# EUROPEAN PATENT APPLICATION

(11) **EP 3 518 213 A1**
(43) Date of publication of application: **31.07.2019**
(21) Application number: 19152420.6
(22) Date of filing: 17.01.2019
(51) Int. Cl.: G08G 5/00, G08G 5/06, G01C 21/34

(54) **METHOD AND SYSTEM FOR AUTOMATICALLY PREDICTING A SURFACE MOVEMENT PATH FOR AN AIRCRAFT BASED ON HISTORICAL TRAJECTORY DATA**

(30) Priority: 24.01.2018 US 201815878521
(71) Applicant: Honeywell International Inc., Morris Plains, NJ New Jersey 07950 (US)
(72) Inventor: WANG, Rui, Morris Plains, NJ New Jersey 07950 (US); CAUFIELD, Sean J., Morris Plains, NJ New Jersey 07950 (US); HE, Gang, Morris Plains, NJ New Jersey 07950 (US); CONNER, Kevin J., Morris Plains, NJ New Jersey 07950 (US); YAN, Sabrina, Morris Plains, NJ New Jersey 07950 (US); FEYEREISEN, Thea L., Morris Plains, NJ New Jersey 07950 (US); ZHANG, Yong, Morris Plains, NJ New Jersey 07950 (US); SHI, Fangzhou, Morris Plains, NJ New Jersey 07950 (US)
(74) Representative: Houghton, Mark Phillip

(57) **Abstract**

Methods and systems are provided for automatically predicting a surface movement path of an aircraft. The method comprises collecting historical aircraft trajectory data from an empirical aircraft path database. Next, aircraft trajectory paths for a designated airport are mapped based on the historical aircraft trajectory data and map data for the designated airport. Different aircraft trajectory paths are each assigned a weight for the designated airport. A graphical display is then generated for each of the aircraft trajectory paths for the designated airport along with a table that identifies a most probable terminal area and entry node for use by the aircraft at the designated airport.

## Description

### TECHNICAL FIELD

The present invention generally relates to aircraft operations. More particularly, the present invention relates to automatically predicting a surface movement path for an aircraft based on historical trajectory data.

### BACKGROUND

During taxiing operations for aircraft, conventional route planning for taxiing to the terminal or to the runway is typically achieved by applying a shortest path algorithm. However, it is common that an air traffic controller (ATC) instruct pilots to detour in order to simplify traffic management based on current surface conditions. This results in the shortest path not always providing an optimum route for the aircraft. Also, there may be other difficulties such as construction activity or localized surface conditions that may affect the optimization of a shortest path algorithm. Hence, there is a need for a method for automatically predicting a surface movement path for an aircraft based on historical trajectory data.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

A method is provided for automatically predicting a surface movement path of an aircraft. The method comprises: collecting historical aircraft trajectory data from an empirical aircraft path database; mapping aircraft trajectory paths for a designated airport based on the historical aircraft trajectory data and map data for the designated airport; assigning a weight for each of the aircraft trajectory paths for the designated airport; generating a graphical display of the aircraft trajectory paths for the designated airport; and generating a table that identifies a most probable terminal area and entry node for use by the aircraft along a trajectory path at the designated airport.

A system is provided for automatically predicting a surface movement path of an aircraft. The system comprises: an empirical aircraft path database located off board the aircraft that provides historical aircraft trajectory data to the aircraft through a data communications link; a surface trajectory predicting application loaded on an electronic device on board the aircraft that receives the historical aircraft trajectory data and maps multiple surface trajectory paths and assigns a probability weighting to each surface trajectory path; and a graphical display unit that displays each of the surface trajectory paths along with a table that identifies the most probable path for the aircraft.

Furthermore, other desirable features and characteristics of the method and system will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 shows a flowchart of a method for automatically predicting a surface movement path for an aircraft in accordance with one embodiment;
FIG.2 shows a diagram of a system for automatically predicting a surface movement path for an aircraft in accordance with one embodiment;
FIG.3 shows a graphical map display of plotted surface movement paths for an aircraft in accordance with one embodiment; and
FIG. 4 shows a graphical map display of automatically plotted alternative surface movement paths for an aircraft in accordance with one embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

A method and system for automatically predicting a surface movement path of an aircraft has been developed. Historical aircraft trajectory data is collected from an empirical aircraft path database. The aircraft trajectory data is stored and categorized based on specific airports. All possible aircraft trajectory paths are mapped for designated airport based on the historical aircraft trajectory data in combination with map data for a designated airport. A weight is assigned to each of the aircraft trajectory paths for the designated airport. The weight reflects the probability of the use of the specific aircraft trajectory path based on the historical trajectory data. A graphical display of each aircraft trajectory path is generated and displayed to an aircrew along with a table that identifies the most probable terminal area and entry node for use by the aircraft along a trajectory path.

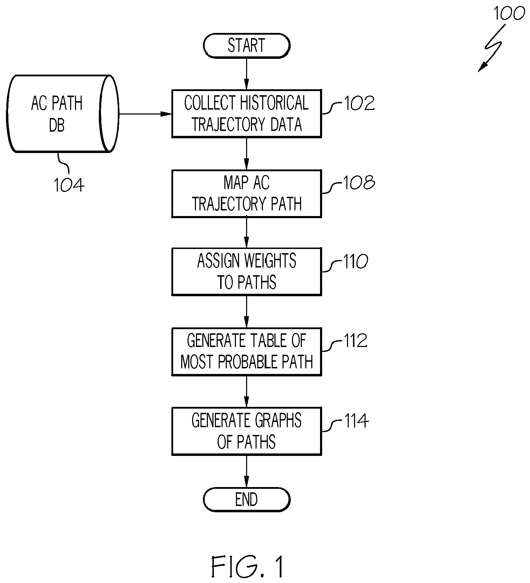

Turning now to FIG. 1, a flowchart 100 of a method for automatically predicting a surface movement path for an aircraft is shown in accordance with one embodiment. First, historical aircraft trajectory data is collected 102 from an empirical aircraft path database 104 for the designated airport. Next, each potential aircraft trajectory path is mapped for the designated airport based on the historical trajectory data 108. A probability value or "weight" is assigned to each path. The weight represents the likelihood of the aircraft being assigned a specific trajectory path for taxi operations. A table is generated that identifies the most probable terminal area and entry node for the aircraft along a trajectory path at the designated airport 112. Additionally, a graphical display is generated for each of the aircraft trajectory paths 114.

The table may be generated on the remote server, and will be used to predict which terminal the aircraft will most probably assigned to use. The most probable terminal for the aircraft will be predicted according to the table and it will be periodically updated on server. The assigned weights are used to plot a path to the probable terminal. However, the different paths may be shown to the aircrew and they may manually select the destination in alternative embodiments.

The table contains information that tells how frequent each terminal in designated airport has been used and also provides pairs of flight identification numbers (ID) and most probable terminal assigned to each flight. In this manner, it is possible to determine which terminal in designated airport is most frequently used and which terminal is most probably assigned for a specified flight. The flight ID information may be retrieved from an automatic dependent surveillance-broadcast (ADS-B) data that is provided from a third-party source.

During operations, the display and the table serves as a guide to prospective trajectory paths for the aircrew. This allows the aircrew to anticipate the most likely path to be assigned by the ATC and make preparations accordingly. The aircrews may also be able to anticipate any changes to their assigned trajectory path due to congestion, runway conditions, etc. This is especially useful with respect to designated airports that may be unfamiliar to the aircrew.

In some embodiments, the empirical aircraft path database may be ADS-B data that is provided from a third-party source. In other embodiments, the empirical aircraft path database may be located onboard the aircraft. The aircraft trajectory paths that are mapped include a series of points or "waypoints" corresponding to geographic locations at the designated airport. Each of the series of points includes a timestamp to determine the distance or travel time between points of the aircraft trajectory path. Additionally, the series of points are listed in order of travel to determine the true direction of the aircraft trajectory path. This time information may be used to determine and categorize of any holding areas where aircraft stops. For example, if aircraft stops at a location for several of hours, that location could be one of airport parking areas, which may not be recorded in airport database yet which may then be updated with this information.

The geographic locations for the designated airport are retrieved from an airport map database that may be stored on board the aircraft in some embodiments. In other embodiments, the airport map database along with the empirical aircraft path database may be stored in a remote server located off board the aircraft. Additionally, the empirical aircraft path database may be updated with the mapped aircraft trajectory paths and assigned weights generated for the aircraft. In this manner, the empirical aircraft path database has the most up-to-date data available.

During operations, the graphical display of the aircraft trajectory paths is continuously updated to reflect the latest airport conditions that may be affected by traffic, weather, runway conditions, etc. Also, the probability weights that are assigned to each aircraft trajectory path may be further categorized by time period in addition to the most recent airport condition data available. For example, certain trajectory paths may receive a lower probability weight during time periods of anticipated high traffic. This may result in weights being assigned with a greater probability value for longer length trajectory paths. These higher probability weight values reflect the quickest trajectory path available which may not be the shortest in length.

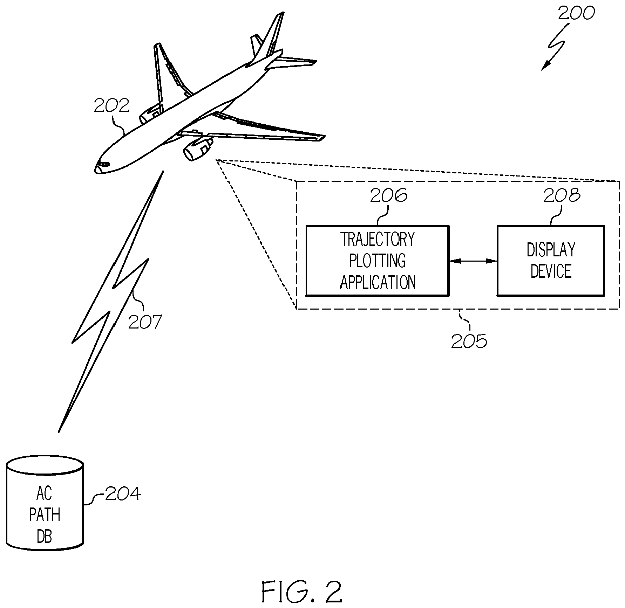

Turning now to FIG. 2, a block diagram 200 of a system for automatically predicting a surface movement path for an aircraft 202 is shown in accordance with one embodiment. In this embodiment, a surface trajectory predicting application 206 is loaded on an electronic device 205 on board the aircraft 202, and is linked to a graphical display device 208 which is also on board the aircraft 202. An empirical aircraft path database 204 is located off board the aircraft 202. The empirical aircraft path database 204 provides historical aircraft trajectory data to the aircraft 202 through a data communications link 207. The electronic device 205 on board the aircraft may be a flight management system (FMS) in some embodiments. In alternative embodiments, the electronic device may be a portable electronic device (PED) such as an electronic flight bag (EFB).

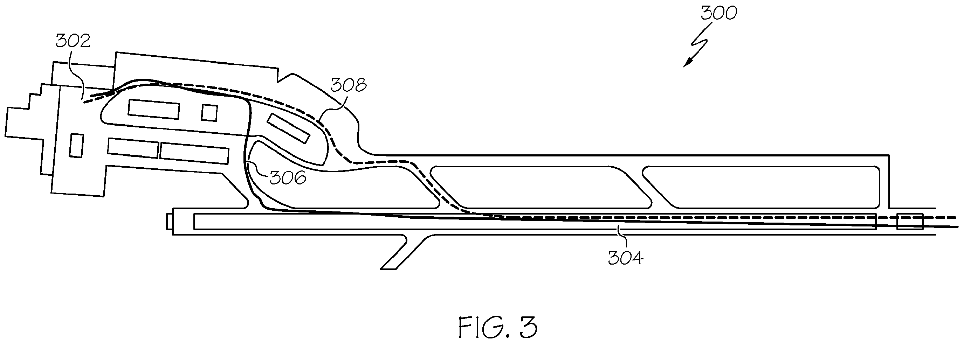

Turning now to FIG. 3, a graphical map display 300 is shown of plotted surface movement paths for an aircraft in accordance with one embodiment. In this embodiment, aircraft trajectory paths between the runway 304 and the air terminal 302 are mapped based on map data from the designated airport. These two aircraft trajectory paths 306 and 308 represent the shortest path from the runway 304 to the air terminal 302. This reflects a more conventional algorithm for trajectory planning for the aircraft.

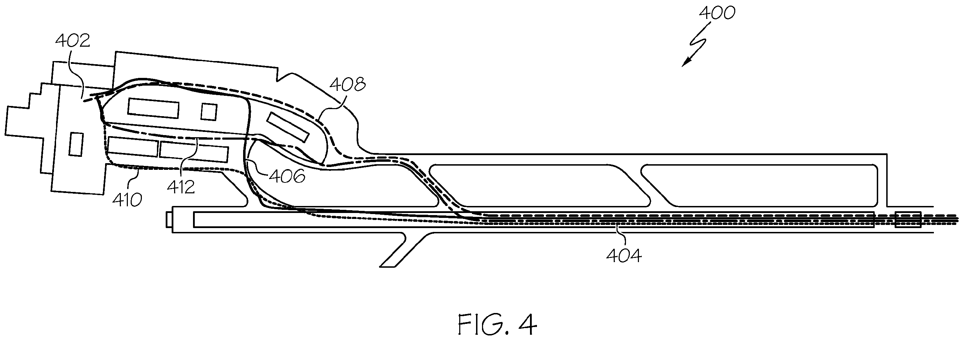

Turning now to FIG. 4, a graphical display 400 is shown of automatic plotted surface movement paths for the aircraft in accordance with one embodiment. These additional automatic plotted surface movement paths 410 and 412 are in addition to the previous aircraft trajectory paths shown in FIG. 3. As in the previous figure, the aircraft trajectory paths are mapped between the runway 404 and the air terminal 402. In this display, a total of 4 separate aircraft trajectory paths 406, 408, 410 and 412 are mapped and plotted on the graphical display device. Each trajectory path is assigned a different weight reflecting the probability of its use. In this embodiment, the weighted probability of each path may be reflected in different color shown on the graphical display where each color represents a different probability of usage by the aircraft.

As previously discussed, these aircraft trajectory mappings will be added as an update to the empirical aircraft path database. Since this database is accessible by all other aircraft using the designated airport, different trajectory paths may be assigned to alleviate traffic congestion in real time. In other embodiments, analysis of the trajectory data in the empirical aircraft path database may identify underused segments and areas of the designated airport when overlaid with a map of the designated airport. These underused areas may be utilized to divert excess traffic or even used as supplemental parking areas, holding areas or taxiways.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method for automatically predicting a surface movement path of an aircraft, comprising:
collecting historical aircraft trajectory data from an empirical aircraft path database;
mapping aircraft trajectory paths for a designated airport based on the historical aircraft trajectory data and map data for the designated airport;
assigning a weight for each of the aircraft trajectory paths for the designated airport;
generating a graphical display of the aircraft trajectory paths for the designated airport; and
generating a table that identifies a most probable terminal area and entry node for use by the aircraft along a trajectory path at the designated airport.

2. The method of Claim 1, where the empirical aircraft path database comprises automatic dependent surveillance-broadcast (ADS-B) data from a third-party source.

3. The method of Claim 1, where the mapped aircraft trajectory paths comprise a series of points with corresponding geographic locations.

4. The method of Claim 1, where the map data for the designated airport is retrieved from an airport map database.

5. The method of Claim 1, where the empirical aircraft path database is updated with the mapped aircraft trajectory paths of the aircraft.

6. The method of Claim 1, where the empirical aircraft path database is updated with the assigned weights for the aircraft trajectory paths.

7. The method of Claim 1, where the weights assigned for the aircraft trajectory paths are categorized by time period.

8. The method of Claim 1, where the weights assigned for the aircraft trajectory paths are greater for most recent data available.

9. The method of Claim 1, where the weights assigned for the aircraft trajectory paths are greater for the shortest length aircraft trajectory path available.

10. The method of Claim 1, where the weights assigned for the aircraft trajectory paths are greater for the quickest aircraft trajectory path available.
